# EUROPEAN PATENT SPECIFICATION

(11) **EP 1 762 869 B1**
(45) Date of publication and mention of the grant of the patent: **12.03.2014**
(21) Application number: 05765383.4
(22) Date of filing: 28.06.2005
(51) Int. Cl.: G02B 6/122, G02B 6/138

(54) **FILM OPTICAL WAVEGUIDE AND METHOD FOR MANUFACTURE THEREOF, AND ELECTRONIC INSTRUMENT DEVICE**
OPTISCHER FILMWELLENLEITER, VERFAHREN ZU DESSEN HERSTELLUNG SOWIE ELEKTRONISCHES INSTRUMENT
GUIDE D"ONDE OPTIQUE À FILM ET MÉTHODE POUR LA MANUFACTURE DUDIT, ET INSTRUMENT ÉLECTRONIQUE

(30) Priority: 28.06.2004 JP 2004189566
(43) Date of publication of application: 14.03.2007
(73) Proprietor: OMRON CORPORATION, Kyoto-shi, Kyoto 600-8530 (JP)
(72) Inventor: ISHIDA, Yoshihisa, OMRON CORPORATION,, Shimogyo-ku, Kyoto-shi, Kyoto 600-8530 (JP); ENAMI, Akira, OMRON CORPORATION, Shimogyo-ku, Kyoto-shi, Kyoto 600-8530 (JP); FUJISAKI, Tamio, OMRON CORPORATION, Shimogyo-ku, Kyoto-shi, Kyoto 600-8530 (JP); HOSOKAWA, Hayami, OMRON CORPORATION, Shimogyo-ku, Kyoto-shi, Kyoto 600-8530 (JP)
(74) Representative: Giovannini, Francesca
(86) International application number: PCT/JP2005/011824
(87) International publication number: WO 2006/001447

(56) References cited:
- JP-A- 7 239 422
- JP-A- 07 239 422
- JP-A- 2003 207 659
- US-A1- 2002 018 633
- ISHIDA Y. ET AL 2004 NEN SHUKI DAI 65 KAI EXTENDED ABSTRACTS; THE JAPAN SOCIETY OF APPLIED PHYSICS vol. 3, 01 September 2004, page 1037, XP002996697
- ENMI A. ET AL 2004 NEN THE INSTITUTE OF ELECTRONICS, INFORMATION AND COMMUNICATION ENGINEERS ELECTRONICS SOCIETY TAIKAI KOEN RONBUNSHU vol. 1, 08 September 2004, page 207, XP002996698

## Description

### TECHNICAL FIELD

The present invention relates to a film waveguide and a method of manufacturing the same. The present invention also relates to an electronic device using the film waveguide.

### BACKGROUND ART

Advancement in optical communication technique enabling large volume data communication at high speed is becoming significant in recent years, and the optical communication network thereof is also continuously expanding. The optical communication technique is used in long range communications traversing the country and in medium range communications within a region, but is also used in optical signal transmission etc. inside the device or between devices for short communication ranges.

Wiring must be performed to thread through a narrow gap between components since various components are closely arranged in portable devices, compact devices, etc. Thus, a flexible print wiring substrate is being widely used for the electrical wiring. Similarly, a flexible film waveguide is desired for transmitting the optical signal at a short distance such as inside the device, and between devices. In particular, a polymer film waveguide having high flexural performance and allowing repetitive bending is desired in view of when wiring the film waveguide in a narrow space inside the portable and compact device or when connecting the film waveguide to a movable part.

The film waveguide is formed by laminating an upper clad layer on a lower clad layer formed with a core on the upper surface, and fluorinated polyimide in which loss of light is small and film processing is easy is used for the material of the polymer film waveguide (e.g., Patent Document 1).

However, the adhesion force at the interface of the upper clad layer and the lower clad layer is weak due to the water-repellent property of the fluorine in the case of the film waveguide in which both the upper clad layer and the lower clad layer are formed by fluorinated polyimide. The interface between the upper clad layer and the lower clad layer tends to easily separate in such film waveguide when the film waveguide is bent. Furthermore, the follow-up property on the deformation of the interface due to bending and shape restoration is demanded for the material for closely attaching the interfaces of the upper clad layer and the lower clad layer when used in an application where the film waveguide is repeatedly bent and shape restored.

Patent document 1: Japanese Laid-Open Patent Publication No. 7-239422

### DISCLOSURE OF THE INVENTION

The present invention aims to provide, in view of the technical problems such as the above, a film waveguide in which separation of the interface between the clad layers is less likely to occur, and a method of manufacturing the same.

The film wave guide according to the present invention is a film waveguide formed with a core between a pair of clad layers, where the clad layers are joined by way of resin having a flexural modulus of smaller than or equal to 1,000 MPa and containing hydrogen bonding group in a functional group of a precursor. The hydrogen bonding group includes carbonyl group, amino group, imino group, and hydroxy group.

In the film waveguide of the present invention, the resin hydrogen bonds with the interface of each clad layer by the hydrogen bonding group since the clad layers are joined by way of resin containing hydrogen bonding group in the functional group of the precursor, and thus the clad layers are joined at high adhesion force. Separation is thus less likely to occur between the clad layers. In particular, separation is less likely to occur in the film waveguide even if the film waveguide is bent. Furthermore, since the film waveguide of the present invention is joined by way of resin having a small flexural modulus or smaller than or equal to 1,000 MPa, the follow-up at the interface when the film waveguide is bent or shape restored is enhanced.

A method of manufacturing a first film waveguide according to the present invention includes the steps of molding a first clad layer formed with a concave groove for core filling; molding a second clad layer; and laminating the surface formed with the concave groove of the first clad layer and the second clad layer using resin having a flexural modulus of smaller than or equal to 1,000 MPa, containing hydrogen bonding group in a functional group of a precursor and having a refraction index higher than the clad layers, and forming a core in the concave groove by the resin. The hydrogen bonding group includes carbonyl group, amino group, imino group, and hydroxy group.

In the method of manufacturing the first film waveguide of the present invention, the resin hydrogen bonds with the interface of each clad layer by the hydrogen bonding group since the clad layers are joined by way of resin containing hydrogen bonding group in the functional group of the precursor, and thus the clad layers are joined at high adhesion force. Separation is thus less likely to occur between the clad layers. In particular, separation is less likely to occur in the film waveguide even if the film waveguide is bent. Furthermore, as joining is carried out by way of resin having a small flexural modulus or smaller than or equal to 1,000 MPa, the follow-up at the interface when the film waveguide is bent or shape restored is enhanced in the film waveguide manufactured according to the above manufacturing method. According to this manufacturing method, the manufacturing steps of the film waveguide are simplified since the joining of the clad layers and the molding of the core are performed all at once in the same step.

A method of manufacturing a second film waveguide according to the present invention includes the steps of molding a first clad layer formed with a concave groove for core filling; forming a core having a flexural modulus of smaller than or equal to 1,000 MPa in the concave groove of the first clad layer; molding a second clad layer; and laminating the first clad layer and the second clad layer using resin having a flexural modulus of smaller than or equal to 1,000 MPa, containing hydrogen bonding group in a functional group of a precursor and having a refraction index lower than the core. The hydrogen bonding group includes carbonyl group, amino group, imino group, and hydroxy group.

In the method of manufacturing the second film waveguide of the present invention, the resin hydrogen bonds with the interface of each clad layer by the hydrogen bonding group since the clad layers are joined by way of resin containing hydrogen bonding group in the functional group of the precursor, and thus the clad layers are joined at high adhesion force. Separation is thus less likely to occur between the clad layers. In particular, separation is less likely to occur in the film waveguide even if the film waveguide is bent. Furthermore, as joining is carried out by way of resin having a small flexural modulus or smaller than or equal to 1,000 MPa, the follow-up at the interface when the film waveguide is bent or shape restored is enhanced in the film waveguide manufactured according to the above manufacturing method. According to this manufacturing method, the flexural performance is further enhanced since the flexural modulus of the core is also small or smaller than or equal to 1,000 MPa.

A method of manufacturing a third film waveguide according to the present invention includes the steps of molding a first clad layer formed with a concave groove for core filling; forming a core in the concave groove of the first clad layer; supplying resin having flexural modulus of smaller than or equal to 1,000 MPa, containing hydrogen bonding group in a functional group of a precursor and having a refraction index lower than the core on the first clad layer and the core, pressing the resin with a die surface having satisfactory separation property, and spreading the resin between the first clad layer and the core and the die surface; and curing the resin, forming a second clad layer with the resin, and separating the die surface from the second surface. The hydrogen bonding group includes carbonyl group, amino group, imino group, and hydroxy group.

In the method of manufacturing the third film waveguide of the present invention, the resin hydrogen bonds with the interface of each clad layer by the hydrogen bonding group since the clad layers are joined by way of resin containing hydrogen bonding group in the functional group of the precursor, and thus the clad layers are joined at high adhesion force. Separation is thus less likely to occur between the clad layers. In particular, separation is less likely to occur in the film waveguide even if the film waveguide is bent. Furthermore, as joining is carried out by way of resin having a small flexural modulus or smaller than or equal to 1,000 MPa, the follow-up at the interface when the film waveguide is bent or shape restored is enhanced in the film waveguide manufactured according to the above manufacturing method. According to this manufacturing method, the manufacturing steps of the film waveguide are simplified since the joining of the clad layers and the molding of the second clad layer are performed all at once in the same step.

A film waveguide module according to the present invention, where the film waveguide according to the present invention and a light projecting element or a light receiving element are arranged and integrated to be optically coupled.

According to the film waveguide module according to the present invention, the film waveguide in which separation is less likely to occur is obtained, where when the relevant waveguide unit is used in an electronic device including the rotating portion such as a hinge part, the film waveguide is less likely to separate even if the rotating portion is repeatedly rotated, and the durability of the film waveguide module is enhanced.

A first electronic device according to the present invention is a foldable electronic device having one member and another member coupled in a freely rotating manner by a rotating portion; where the film waveguide according to the present invention is passed through the rotating portion and wired between one member and the other member.

According to the electronic device of the present invention, the film waveguide in which separation is less likely to occur is obtained, where when the relevant waveguide unit is used in an electronic device including the rotating portion such as a hinge part, the film waveguide is less likely to separate even if the rotating portion is repeatedly turned and the durability of the electronic device is enhanced.

A second waveguide unit according to the present invention is an electronic device including a moving part in a device main body; where the moving part and the device main body are optically coupled by way of the film waveguide according to claim 1 or 2.

According to the film waveguide of the present invention, the film waveguide in which separation is less likely to occur is obtained, where when the relevant waveguide unit is used in an electronic device including the moving part, separation is less likely to occur even if the film waveguide is repeatedly deformed with the movement of the moving part and the durability of the electronic device is enhanced.

Note that the above-described components of the present invention can be arbitrarily combined to the greatest extent practicable.

### BRIEF DESCRIPTION OF THE DRAWINGS

Figs. 1(a) to 1(d) are schematic cross sectional views describing the steps until a lower clad layer is molded in Embodiment 1 of the present invention.
Figs. 2(a) to 2(d) are schematic cross sectional views describing the steps until an upper clad layer is molded in Embodiment 1 of the present invention.
Figs. 3(a) to 3(e) are schematic cross sectional views describing the steps until the upper clad layer and the lower clad layer are laminated to form a film waveguide in Embodiment 1 of the present invention.
Fig. 4 is a chemical formula indicating one part of a group contained in a monomer and an oligomer of the precursor of the elastomer used in the clad material.
Fig. 5 is a view showing the type of hydrogen bonding group.
Figs. 6(a) to 6(e) are schematic cross sectional views describing the manufacturing steps of a film waveguide according to Embodiment 2 of the present invention.
Figs. 7(a) to 7(d) are schematic cross sectional views describing the manufacturing steps of a film waveguide according to Embodiment 3 of the present invention.
Fig. 8 is a plan view showing a film waveguide module for one-way communication according to Embodiment 4 of the present invention.
Fig. 9 is a schematic cross sectional view showing one section of the film waveguide module shown in Fig. 8 in an enlarged manner.
Fig. 10(a) is a view showing a film waveguide in which the core is deformed by tensile force in a frame format form, and Fig. 10(b) is a view showing a film waveguide in which the deformation of the core by tensile force is reduced in a frame format form.
Fig. 11 is a plan view showing a film waveguide module for two-way communication according to Embodiment 4 of the present invention.
Fig. 12 is a perspective view of a portable telephone, which is Embodiment 5 of the present invention.
Fig. 13 is a schematic view showing a circuit configuration of the portable telephone.
Fig. 14 is a perspective view showing a state in which the display part side and the operation part side of the portable telephone are connected by means of the film waveguide in a frame format form.
Fig. 15 is a perspective view showing a configuration of a different portable telephone according to Embodiment 5 of the present invention.
Fig. 16(a) is a view showing a state in which the film waveguide in the portable telephone is twisted, and Fig. 16(b) is a view showing a cross section taken along line X-X of Fig. 16(a) in an enlarged manner.
Fig. 17 is an explanatory view showing the length αW of the twisted region of the film waveguide.
Fig. 18 is a view showing a relationship between the ratio α of the length of the twisted region with respect to the width of the film waveguide and the limit value of the required elastic modulus.
Figs. 19(a) and 19(b) are schematic views showing the configuration of another further portable telephone according to Embodiment 5 of the present invention, where Fig. 19(a) is a view showing a state folded in half, and Fig. 19(b) is a view showing an opened state.
Fig. 20 is a perspective view of a printer, which is Embodiment 6 of the present invention.
Fig. 21 is a schematic view showing a circuit configuration of the printer.
Figs. 22(a) and 22(b) are perspective views showing a deforming state of the film waveguide when a printing head of the printer moves.
Fig. 23 is a perspective view of a hard disc drive, which is Embodiment 7 of the present invention.

### EXPLANATION OF SYMBOLS

- 21: Substrate
- 22: Clad material
- 23: Stamper
- 24: Convex pattern
- 25: Concave groove
- 26: Lower clad layer
- 27: Polymer adhesive
- 28: Core
- 30: Upper clad layer
- 31: Substrate
- 32: Substrate
- 33: Stamper
- 34: Substrate
- 35: Film waveguide
- 36: Film waveguide
- 37: Film waveguide

### BEST MODE FOR CARRYING OUT THE INVENTION

Embodiments of the present invention will now be described in detail according to the drawings. It should be recognized that the present invention is not be limited to the following embodiments.

### Embodiment 1

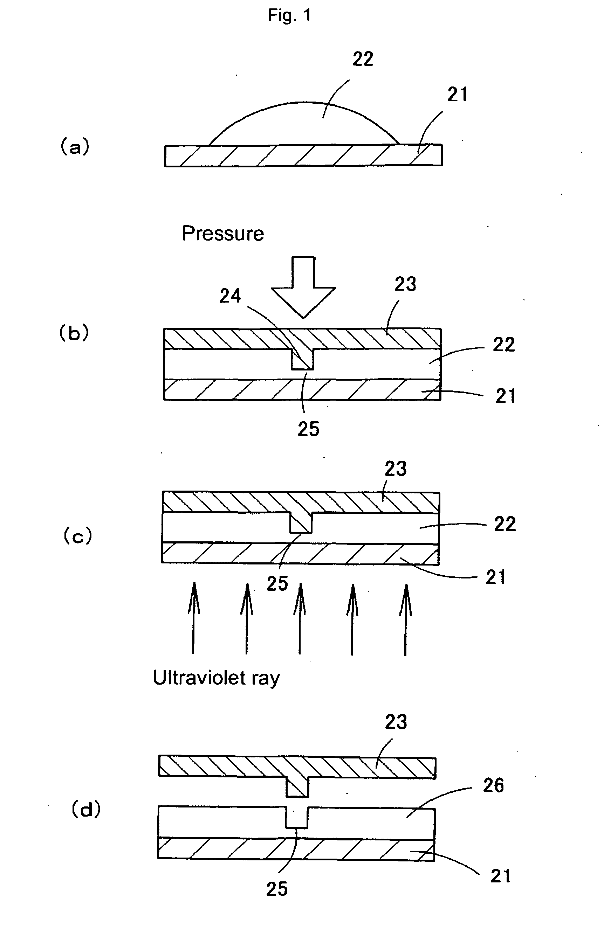

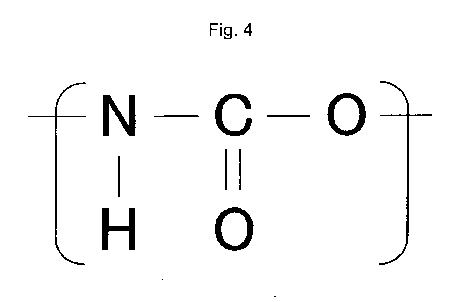

Figs. 1, 2 and 3 are schematic cross sectional views describing the method of manufacturing the film waveguide according to Embodiment 1 of the present invention. In manufacturing the film waveguide according to the present invention, a lower clad layer 26 is molded on the substrate 21, as shown in Fig. 1. That is, a flat substrate 21 having translucency such as glass substrate is first prepared. As shown in Fig. 1(a), clad material 22 is applied onto the substrate 21. The clad material 22 used in Embodiment 1 is a mixture of urethane monomer and urethane oligomer containing the group shown in Fig. 4, and polymerization initiator, and is a precursor of an elastomer having the flexural modulus after curing of smaller than or equal to 1,000 MPa. The clad material is ultraviolet curable type.

As shown in Fig. 1(b), a stamper (forming die) 23 is pressed against the clad material 22 from above and pressure is applied to the stamper 23 thereby thinly spreading the clad material 22 between the substrate 21 and the stamper 23, and thinning the film thickness of the clad material 22. A convex pattern 24 for forming a concave groove 25 in the lower clad layer 26 is formed on the lower surface of the stamper 23, whereby the concave groove 25 is formed in the upper surface of the clad material 22 when pressed down by the stamper 23. The ultraviolet energy is then irradiated onto the clad material 22 from the lower surface through the substrate 21 to cure the clad material 22, as shown in Fig. 1(c).

After the clad material 22 is cured and the lower clad layer 26 is molded, the stamper 23 is separated from the lower clad layer 26, as shown in Fig. 1 (d). When the stamper 23 is separated, the concave groove 25 is formed in the upper surface of the lower clad layer 26 by the convex pattern 24.

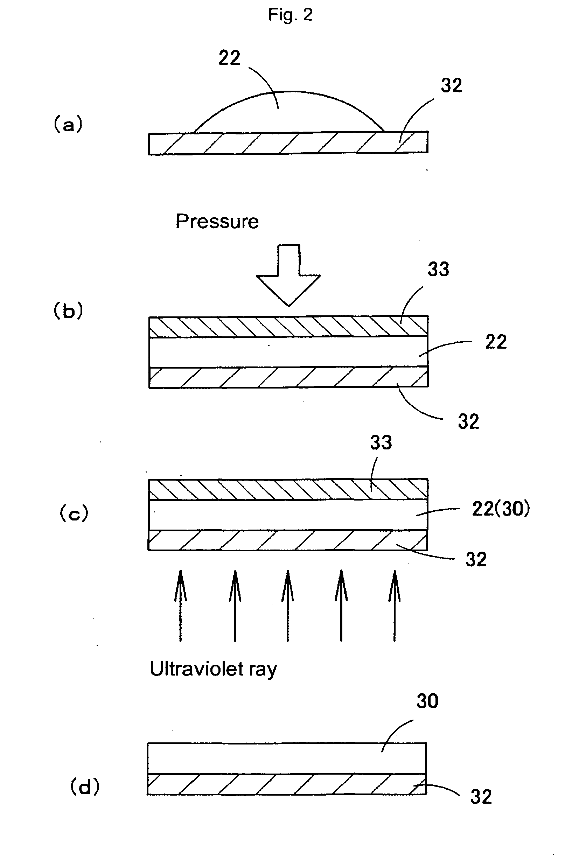

An upper clad layer 30 is formed on a different substrate 32, as shown in Fig. 2. That is, the clad material 22 is applied on a flat substrate 32 having translucency such as glass substrate, as shown in Fig. 2(a). The clad material 22 is a mixture of urethane monomer and urethane oligomer containing the group shown in Fig. 4, and polymerization initiator, and is a precursor of an elastomer having the flexural modulus after curing of smaller than or equal to 1,000 MPa. A flat plate shaped stamper 33 is then pressed against the clad material 22 and pressure is applied to the stamper 33 thereby thinly spreading the clad material 22 between the substrate 32 and the stamper 33 and thinning the film thickness, as shown in Fig. 2(b). The ultraviolet energy is then irradiated onto the clad material 22 through the substrate 32 to cure the clad material 22, as shown in Fig. 2(c). After the clad material 22 is cured and the upper clad layer 30 is molded, the stamper 33 is separated from the upper clad layer 30, as shown in Fig. 2(d). When the stamper 33 is separated, the upper clad layer 30 having a flat upper surface is formed on the substrate 32.

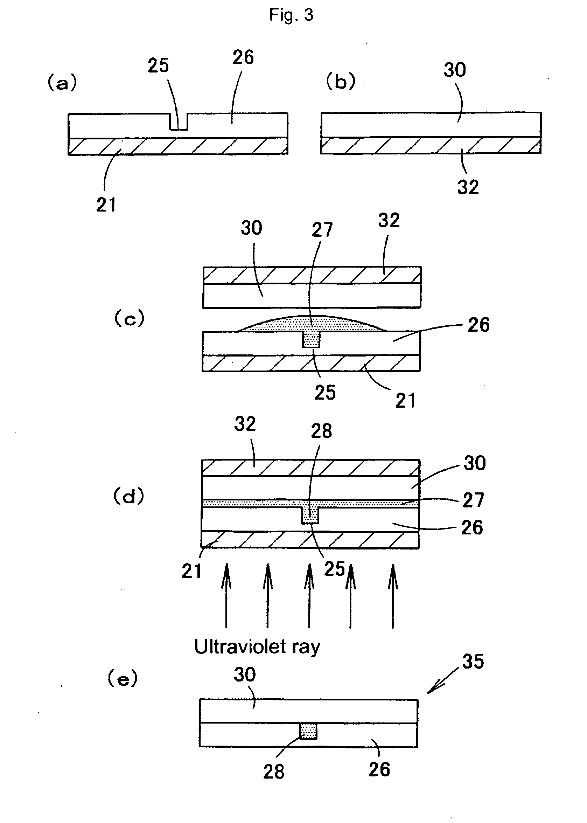

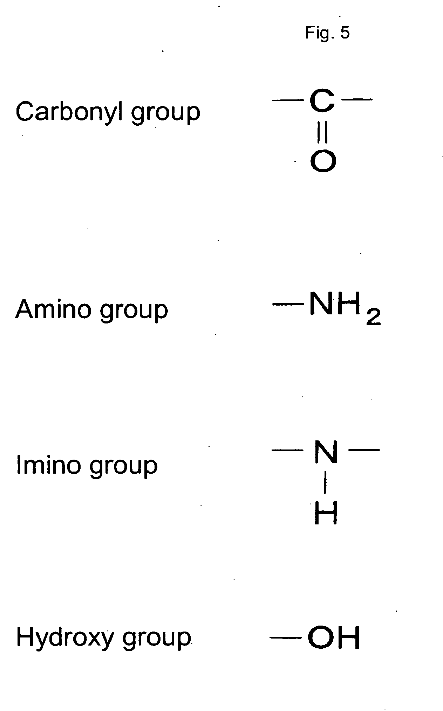

After the lower clad layer 26 formed with the concave groove 25 on the upper surface is molded on the substrate 21, as shown in Fig. 3(a), and the upper clad layer 30 having a flat upper surface is molded on the substrate 32, as shown in Fig. 3(b), the polymer adhesive 27 of ultraviolet curable type having a refraction index after curing higher than the lower clad layer 26 and the upper clad layer 30 is applied onto the lower clad layer 26, as shown in Fig. 3(c). The polymer adhesive 27 used is a mixture of a precursor consisting of monomer and oligomer of a polymer having the flexural modulus after curing of 1,000 MPa and containing hydrogen bonding group in a functional group, and the polymerization initiator. The hydrogen bonding group is carbonyl group, amino group, imino group, and hydroxy group expressed with a chemical formula shown in Fig. 5.

Furthermore, the upper clad layer 30 is turned up side down with the substrate 32 so that the upper surface of the upper clad layer 30 is face down, and the upper clad layer 30 is superimposed on the polymer adhesive 27. The pressing force of about 100 kg is applied to the polymer adhesive 27 from above the upper clad layer 30 thereby sandwiching and thinly spreading the polymer adhesive 27 between the lower clad layer 26 and the upper clad layer 30.

Subsequently, the ultraviolet energy is irradiated onto the polymer adhesive 27 through the substrate 21 or 32 to cure the polymer adhesive 27, thereby forming a core 28 in the concave groove 25 by the polymer adhesive 27 and joining the upper clad layer 30 and the lower clad layer 26, as shown in Fig. 3(d). Finally, the substrates 32, 21 on the front and the back are separated from the upper clad layer 30 and the lower clad layer 26, respectively, to obtain a film, thereby obtaining a film waveguide 35 as shown in Fig. 3(e).

The flexural modulus enhances in such film waveguide 35 because the flexural modulus of the lower clad layer 26 and the upper clad layer 30 is small or 1,000 MPa, and also because the lower clad layer 26 and the upper clad layer 30 have thin thickness by being pressed down with the stamper 23, 33.

Since pressure always acts in the same direction at the lower clad layer 26 shown in Fig. 3(a) and the upper clad layer 30 shown in Fig. 3(b) having thinned film thickness due to pressure application by means of the stamper, an internal stress (or residual moment) generates in the same direction with respect to each other. Thus, a warp that becomes concave on the upper surface side of Fig. 3(a) and Fig. 3(b) occurs in the lower clad layer 26 and the upper clad layer 30. When the lower clad layer 26 and the upper clad layer 30 are then laminated with the upper clad layer 30 turned upside down as shown in Fig. 3(c), the internal stress produced at the upper clad layer 30 and the internal stress of the lower clad layer 26 cancel each other, whereby the warp is less likely to be produced at the film waveguide 35, which is a laminated body.

Moreover, the manufacturing efficiency of the film waveguide 35 enhances because the molding of the core 28, and joining of the clad layers 26, 30 are simultaneously performed in the present embodiment.

In the film waveguide 35 manufactured in the above manner, the polymer adhesive 27 described above is used in adhering the upper clad layer 30 and the lower clad layer 26. The interface of the upper clad layer 30 and the interface of the lower clad layer 26 are hydrogen bonded through the hydrogen bonding group of the polymer adhesive 27 since the hydrogen bonding group of the type shown in Fig. 5 is contained as the functional group in the polymer adhesive 27, and thus high adhesion force is obtained between the upper clad layer 30 and the lower clad layer 26. Furthermore, the polymer adhesive 27 smoothly follows the deformation of the interface of the upper clad layer 30 and the lower clad layer 26 when the film waveguide 35 is bent or shape restored since the polymer adhesive 27 has the flexural modulus after curing of a small value or smaller than or equal to 1,000 MPa. Therefore, according to Embodiment 1, the strength with respect to the separation in bending and shape restoration can be provided to the film waveguide 35, and the follow-up with respect to bending and shape restoration can be enhanced.

For example, with regards to a test sample of the film waveguide 35 according to Embodiment 1, the film waveguide 35 can be bent to a curvature radius of 3 mm. Furthermore, separation of the interface does not occur even when the film waveguide 35 is repeatedly bend for 200 thousand times.

When elastomer having the flexural modulus of 500 MPa is used for the clad material 22 of the upper clad layer 30 and the lower clad layer 26, the obtained waveguide 35 can be bent to a curvature radius of 2 mm and separation of the interface does not occur even when the film waveguide 35 is repeatedly bend for 200 thousand times. Furthermore, when the clad material 22 having the flexural modulus of 200 MPa is used, the obtained waveguide 35 can be bent to a curvature radius of 1 mm and separation of the interface does not occur even when the film waveguide 35 is repeatedly bend for 200 thousand times. The limit value for the number of repetitive bending is not changed from when the flexural modulus is smaller, even if the flexural modulus of the polymer adhesive 27 is 1,000 MPa, because the follow-up is ensured since the thickness of the adhesive layer consisting of the polymer adhesive 27 is thin compared to the thickness of the upper and lower clad layers 30, 26.

The polymer adhesive 27 is filled into the concave groove 25 to form the core 28 after the concave groove 25 of the lower clad layer 26 is formed with the stamper 23 in the steps shown in Fig. 1 of the above embodiment, but the concave groove 25 may be formed through etching, etc. The core of a ridge shape may be formed on the lower clad layer 26 with a flat upper surface through etching, photolithography etc. The polymer adhesive 27 of ultraviolet curable type is used in the present embodiment, but adhesive that cures when heat is added (thermosetting adhesive), adhesive in which polymerization initiates by the moisture in air or at the surface of the interface when the curing time is short, or adhesive in which polymerization initiates by shielding air (anaerobic adhesive) may be used.

The material other than the clad material 22 (elastomer) may be used for the upper clad layer 26 and the lower clad layer 26. For example, the polymer that can be bent to the curvature radius of smaller than or equal to about 3 mm may be used for the clad material 22 other than the elastomer.

### Embodiment 2

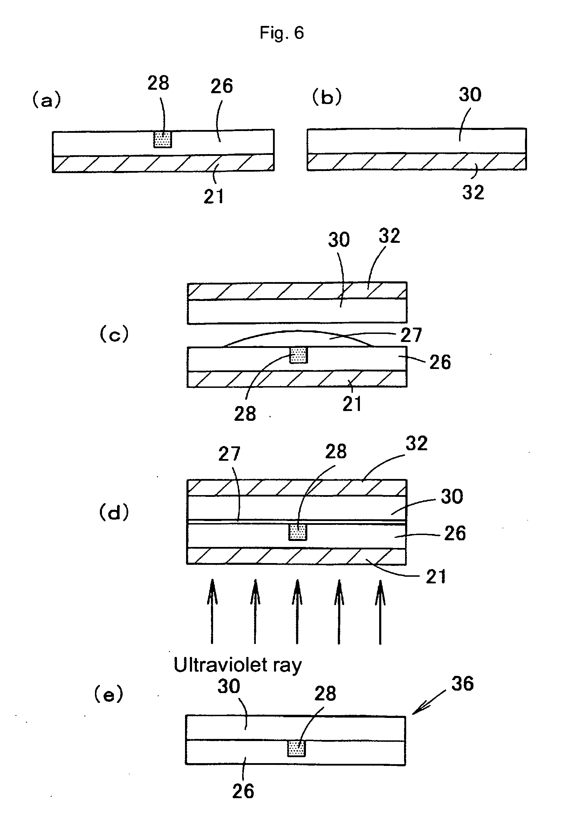

Fig. 6 is a view describing a method of manufacturing a film waveguide according to Embodiment 2 of the present invention. The lower clad layer 26 shown in Fig. 6(a) is formed by molding the lower clad layer 26 and forming the lower clad layer 26 on the upper surface of the lower clad layer 26 through steps same as in Fig. 1(a) to Fig. 1(d) of Embodiment 1, and thereafter, forming a core 28 in the lower clad layer 26 with a polymer having a flexural modulus after curing of smaller than or equal to 1,000 MPa and having a refraction index greater than the lower clad layer 26. The upper clad layer 30 shown in Fig. 6(b) is molded through steps same as in Fig. 2(a) to Fig. 2(d).

After the lower clad layer 26 including the core 28 as in Fig. 6(a) and the upper clad layer 30 as in Fig. 6(b) are prepared, the polymer adhesive 27 having a refraction index lower than the core 28 is applied onto the lower clad layer 26 and the core 28, as shown in Fig. 6(c), the upper clad layer 30 is turned upside down with the substrate 32 and superimposed on the polymer adhesive 27 thereby sandwiching and thinly spreading the polymer adhesive 27 between the lower clad layer 26 and the upper clad layer 30. The polymer adhesive 27 is a mixture of a precursor consisting of monomer and oligomer of a polymer having the flexural modulus after curing of 1,000 MPa and containing hydrogen bonding group in a functional group, and the polymerization initiator.

Subsequently, the ultraviolet energy is irradiated onto the polymer adhesive 27 through the substrate 21 or 32 to cure the polymer adhesive 27, thereby joining the upper clad layer 30 and the lower clad layer 26 with the polymer adhesive 27, as shown in Fig. 6(d). Finally, the substrates 32, 21 on the front and the back are separated from the upper clad layer 30 and the lower clad layer 26, respectively, to obtain a film, thereby obtaining a film waveguide 35 shown in Fig. 6(e).

Effects similar to the film waveguide 35 of Embodiment 1 are also obtained with the film waveguide 36.

### Embodiment 3

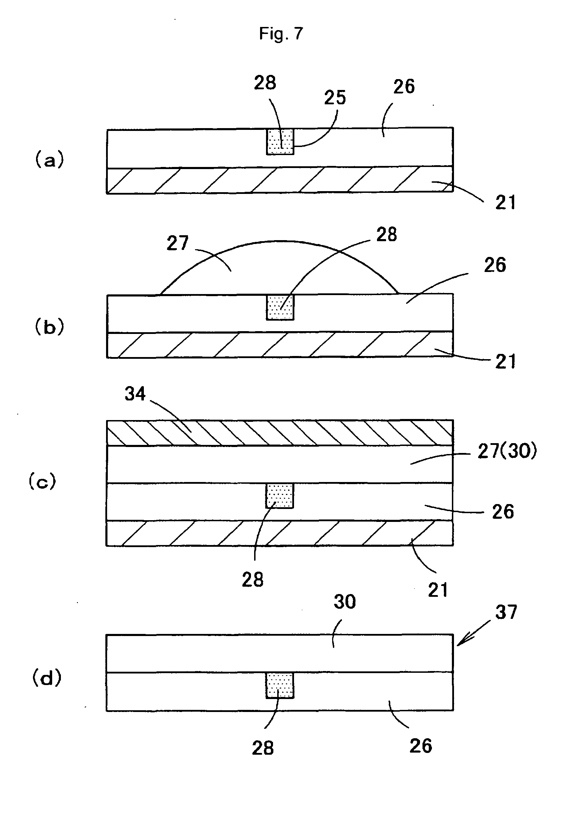

Figs. 7(a) to 7(d) are views describing the method of manufacturing a film waveguide according to Embodiment 3 of the present invention. In Embodiment 3, the lower clad layer 26 including the concave groove 25 is formed on the substrate 21 through steps similar to Fig. 1 of Embodiment 2. The clad material 22 of ultraviolet curable type used in this case is a mixture of urethane monomer and urethane oligomer containing the group shown in Fig. 4, and polymerization initiator, and is a precursor of an elastomer having the flexural modulus after curing of smaller than or equal to 1,000 MPa. The core 28 is then formed in the concave groove 25, as shown in Fig. 7(a). Thereafter, the polymer adhesive 27 having a refraction index lower than the core 28 is applied on the lower clad layer 26 and the core 28, as shown in Fig. 7(b). The polymer adhesive 27 is a mixture of a precursor consisting of monomer and oligomer of a polymer having the flexural modulus after curing of 1,000 MPa and containing hydrogen bonding group in a functional group, and the polymerization initiator.

Subsequently, the polymer adhesive 27 is pressed down with the flat die surface of the substrate 34 having satisfactory separation property consisting of silicone etc., and a pressing force of about 100 kg is applied thereby sandwiching and thinly spreading the polymer adhesive 27 between the lower clad layer 26 and the substrate 34, as shown in Fig. 7(c). The ultraviolet energy is then irradiated onto the polymer adhesive 27 through the substrate 21 or 34 to cure the polymer adhesive 27, and the upper clad layer 30 is molded by the polymer adhesive 27 and the upper clad layer 30 and the lower clad layer 26 are joined. Finally, the substrates 34, 21 on the front and the back are respectively separated from the upper clad layer 30 and the lower clad layer 26 to obtain a film, thereby obtaining a film waveguide 37 shown in Fig. 7(d).

Since the upper clad layer 30 is molded by the polymer adhesive 27 in such film waveguide 37, the step of molding the upper clad layer 30 and the step of joining the lower clad layer 26 and the upper clad layer 30 are performed at the same time, thereby simplifying the manufacturing steps of the film waveguide 37.

The adhesive force between the interfaces of the upper clad layer 30 and the lower clad layer 26 is increased and the separation of the interface is prevented since the upper clad layer 30 is formed by the polymer adhesive 27 of high adhesion force. Meanwhile, the substrate 34 is easily separated from the upper clad layer 30 since the substrate 34 for molding the upper clad layer 30 with the polymer adhesive 27 has high separation property.

It should be recognized that Embodiment 3 also includes a film waveguide 37 without the upper clad layer 30 formed by adhering the lower clad layer 26 and the substrate 34 with the polymer adhesive 27 and then separating the substrate 34 of high separation property.

The elastomer described above is used for the clad material for forming the lower clad layer and the upper clad layer in Embodiments 1 to 3, but the material having a relatively strong bending strength such as polyimide may be used for the clad material. The film waveguide having a high adhesion force and in which separation is less likely to occur is still obtained even if the material of a relatively strong bending strength such as polyimide is used for the clad material by joining both clad layers by way of resin having a flexural modulus after curing of 1,000 MPa and containing hydrogen bonding group in the functional group of the precursor thereof.

### Embodiment 4

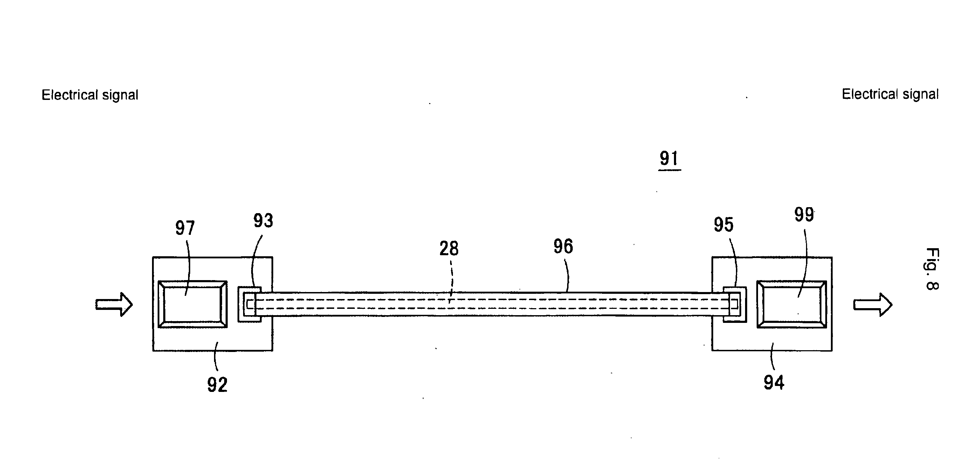

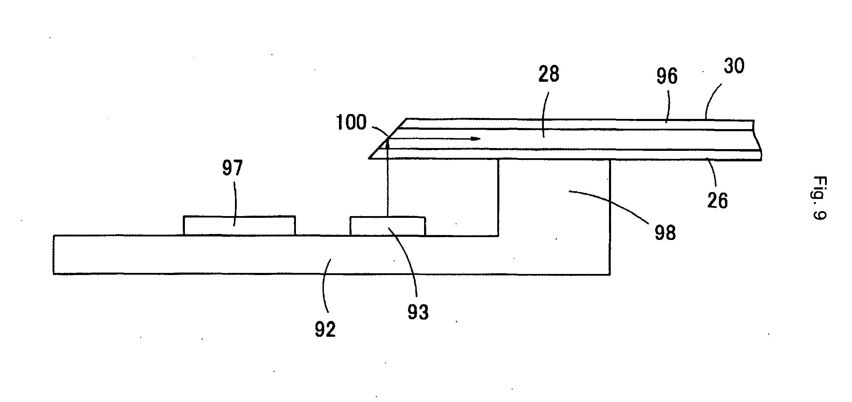

Fig. 8 is a plan view showing a film waveguide module for a one-way communication according to Embodiment 4 of the present invention, and Fig. 9 is a schematic cross sectional view showing one section of Fig. 8 in an enlarged manner. A film waveguide module 91 is obtained by connecting both wiring substrates 92, 94 with the film waveguide 96 by connecting both ends of the film waveguide 96 according to the present invention to a light projecting element 93 mounted on one wiring substrate 92 and to a light receiving element 95 mounted no another wiring substrate 94.

A driving IC 97 and the light projecting element 93 of area light emitting type such as VCSEL are mounted on the wiring substrate 92 on the transmission side. The light emitting direction of the light projecting element 93 is a direction substantially perpendicular to the upper surface of the wiring substrate 92. One end of the film waveguide 96 is cut to an angle of 45° as shown in Fig. 9, and the film waveguide is fixed on a supporting platform 98 so that the relevant end of the film waveguide 96 is parallel to the wiring substrate 92 and the surface 100 cut to 45° is facing diagonally upward. Furthermore, the surface 100 cut to 45° of the core 28 is positioned on an optical axis of the light ray emitted from the light projecting element 93.

An amplifying IC 99 and the light receiving element 95 are mounted on the wiring substrate 94 on the reception side 94. The other end of the film waveguide is also cut to an angle of 45°, and the film waveguide is fixed on a supporting platform (not shown) so that the relevant end of the film waveguide 96 is parallel to the wiring substrate 94 and the surface 100 cut to 45° is facing diagonally upward. The light receiving element 95 is positioned immediately below the surface cut to 45° of the core 28.

Therefore, when the electrical signal input to the driving IC 97 is converted to an optical signal (converted light) and the optical signal is emitted from the light projecting element 93, the light emitted from the light projecting element 93 enters the core 28 from the lower surface of the film waveguide 96. The optical signal that has entered the core 28 is totally reflected at the surface cut to 45° of the core 28 so that the advancing direction is bent to a direction substantially parallel to the length direction of the core 28, and coupled to the core 28.

The optical signal coupled to one end of the film waveguide 96 then propagates through the core 28, and reaches the other end of the film waveguide 96. The light that has reached the other end of the film waveguide 96 is totally reflected at the surface cut to 45° of the core 28, emitted downwardly from the other end of the film waveguide 96 and received by the light receiving element 95. The optical signal light received at the light receiving element 95 is converted to the electrical signal, which electrical signal is amplified in the amplifying IC 99 and then output to the outside from the wiring substrate 94.

In such film waveguide module 91, the wiring substrate 92 and the wiring substrate 94 are not necessarily arranged in the same plane, and the optical signal can be transmitted from the wiring substrate 92 side to the wiring substrate 94 side even if the wiring substrates 92 and 94 are arranged in an arbitrary plane since the film waveguide 96 can be flexibly bent.

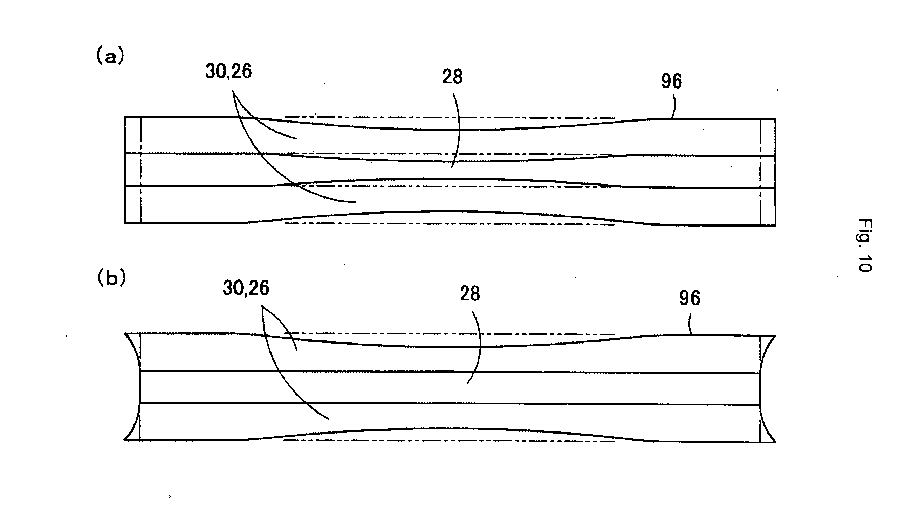

However, a mechanical tensile force is sometimes applied to the film waveguide 96 when the wiring substrates 92 and 94 connected by way of the film waveguide 96 are separately arranged. Since the flexural modulus of the upper and lower clad layers 30, 26 is small or smaller than or equal to 1,000 MPa in the film waveguide module 91 of the present invention, the film waveguide module 91 can be stretched by simply applying small tensile force thereby narrowing the width of the film waveguide module 91, as shown in Fig. 10(a). If the flexural modulus of the core 28 and the flexural modulus of the upper and lower clad layers 30, 26 are the same, the core 28 similarly stretches and the core diameter thereof becomes narrower, or the cross section of the core deforms thereby changing the mode of the optical signal propagated through the core 28 and deteriorating the transmission property of the optical signal.

Therefore, the flexural modulus of the core 28 is made greater than the flexural modulus of the upper and lower clad layers 30, 26 in the film waveguide module 91. That is, the flexural modulus of the upper and lower clad layers 30, 26 is made to be smaller than or equal to 1,000 MPa, and the flexural modulus of the core 28 is made to be greater than the flexural modulus of the upper and lower clad layers 30, 26. As a result, the rigidity of the upper and lower clad layers 30, 26 becomes lower than the core 28, and furthermore, as the core 28 is not directly fixed to the wiring substrates 92, 94, the tensile force is absorbed by the upper and lower clad layers 30, 26 as shown in Fig. 10(b) even if a mechanical tensile force etc. is applied to the film waveguide 96. The deformation of the core 28 is thereby reduced, and the deterioration of the transmission property of the film waveguide 96 is suppressed.

Moreover, the transmission property of the film waveguide 96 deteriorates due to the core diameter or the cross sectional shape of the core when the film waveguide 96 is twisted, which aspect will be hereinafter described in relation to portable telephones.

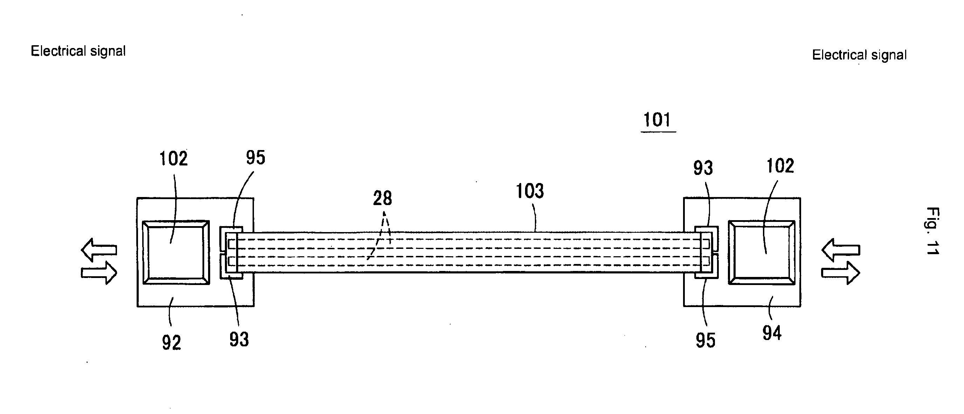

The film waveguide module 91 for one-way communication has been described in the above embodiment, but may be a film waveguide module of two-way communication. For example, the film waveguide module 101 for two-way communication shown in Fig. 11 has both wiring substrates 92, 94 respectively mounted with the driving and amplifying IC 102 having the functions of the driving IC and the amplification IC, the light projecting element 93 and the light receiving element 95. The light projecting element 93 of the wiring substrate 92 and the light receiving element 95 of the wiring substrate 94 are connected with one core 28, and the light projecting element 93 of the wiring substrate 94 and the light receiving element 95 of the wiring substrate 92 are connected with the other core using the two-core film waveguide 103 as the film waveguide. According to such film light waveguide module 101, the electrical signal input to one wiring substrate 92 or 94 is propagated as the optical signal via the film waveguide module 101, and is restored and output as the electrical signal from the other wiring substrate 94 or 92.

The film waveguide module in which the light emitting element and the light receiving element are connected by way of the film waveguide has been described in the above embodiment, but the circuit substrates may be connected by connecting both ends to an optical connector mounted on the circuit substrate.

### Embodiment 5

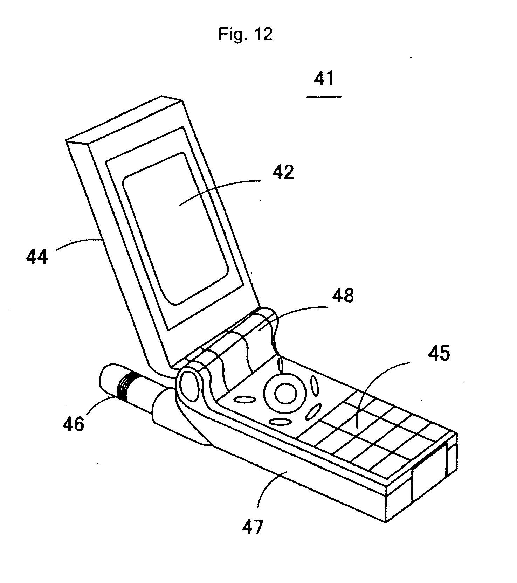

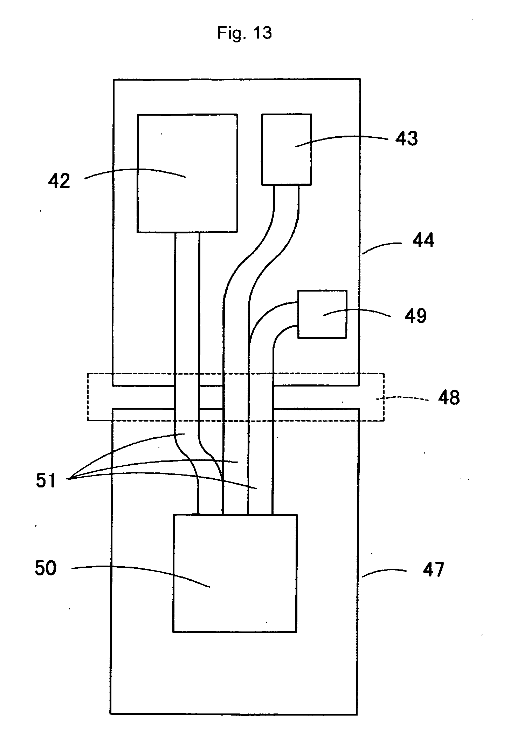

An application (Embodiment 5) using the film waveguide according to the present invention will now be described. The film waveguide 51 used below is not limited to the film waveguide including one core as described hereinabove, and may be film waveguides in which a plurality of cores are wired in parallel, film waveguides in which the core is branched or the like. Fig. 12 is a perspective view showing a foldable portable telephone 41 that can be folded in half, and Fig. 13 is a schematic configuration diagram thereof. The portable telephone 41 has a configuration in which a display part 44 including a liquid crystal display panel 42 and a digital camera 43, and an operation part 47 including a key panel 45 such as ten key and an antenna 46 are coupled in a freely rotating manner by a hinge part 48. The digital camera 43 is arranged on the back surface side of the liquid crystal display panel 42. An external memory 49 is mounted in the display part 44, and an integrated circuit (LSI) 50 for executing the communication function or accepting the input from the key panel 45 and executing various functions is mounted on the operation part 47.

Therefore, the signal must be transmitted and received between the integrated circuit 50 in the operation part 47, and the liquid crystal display panel 42 and the digital camera 43 in the display part 44 and the display part 44. In the portable telephone 41 of Embodiment 5, the film waveguide 51 according to the present invention is used to connect the operation part 47 side and the display part 44 side, as shown in Fig. 13. That is, the integrated circuit 50 in the operation part 47, and the liquid crystal display panel 42, the digital camera 43 and the external memory 49 in the display part 44 are connected by way of the film waveguide 51 to allow transmission and reception of the optical signal.

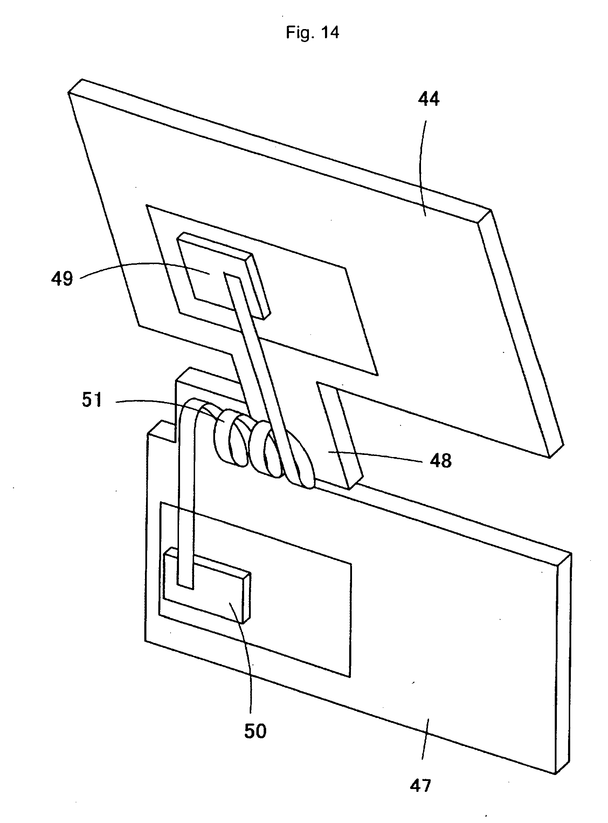

The film waveguide 51 must pass through the hinge part 48 in order to realize such configuration. In Embodiment 5, the configuration in which the film waveguide 51 is bent in a spiral form at the hinge part 48 is used for such configuration, as shown in Fig. 14. In order to manufacture such film waveguide 51, the flat film waveguide 51 is winded to a supporting rod etc. to give a winding habit after the flat film waveguide 51 is manufactured. The film waveguide 51 according to the present invention can be bent so as to have a small curvature radius, and thus the film waveguide 51 will not be damaged even when formed into the spiral form.

According to Embodiment 5, high speed and large volume communication can be realized in a limited space in the portable telephone 41. Since the film waveguide 51 of the present invention has high flexural performance, the film waveguide 51 is less likely to be damaged even when the portable telephone 41 is repeatedly opened and closed. Furthermore, since the film waveguide 51 is formed into a spiral form at the hinge part 48, a large load is less likely to be applied to the film waveguide 51 at the hinge part 48 even if the portable telephone 41 is opened and closed, and the durability of the film waveguide 51 is further enhanced.

The portable telephone 41 is not limited to that in which the display part 44 and the operation part 47 are folded in half, and may be that in which the display part 44 is rotated in a plane parallel to the operation part 47 and folded.

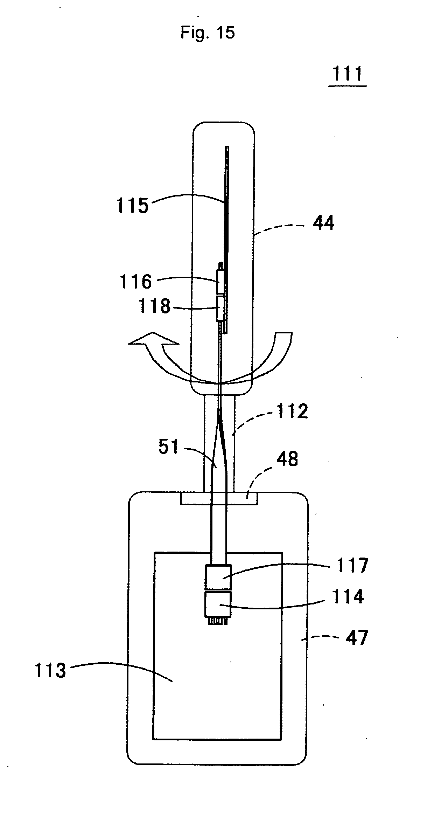

**Fig. 15** shows a schematic view showing another example of the portable telephone 111. The portable telephone 111 is a biaxial rotation type portable telephone. That is, the display part 44 and the operation part 47 can be folded in half and opened at the hinge part 48. Furthermore, the display part 44 can be rotated about the axis line direction orthogonal to the axis direction of the hinge part 48 at a hinge part 112.

With regards to the inside of the portable telephone 111, an optical connector 114 is arranged in the wiring substrate 113 accommodated in the operation part 47, and an optical connector 116 is arranged in the wiring substrate 115 arranged in the display part 44. The optical connector 117 arranged at one end of the film waveguide 51 is coupled to the optical connector 114, the optical connector 118 arranged at the other end of the film waveguide 51 is coupled to the optical connector 116, and the wiring substrate 113 of the operation part 47 and the wiring substrate 115 of the display part 44 are connected through the film waveguide 51. The film waveguide 51 substantially linearly connects the wiring substrate 113 and the wiring substrate 115 when the display part 44 and the operation part 47 are in the opened state.

In such portable telephone 111, the film waveguide 51 curves and bends when the display part 44 and the operation part 47 are folded in half, and the film waveguide 51 twists when the display part 44 is rotated by the hinge part 112. The film waveguide 51 is easily bent or twisted with a small external force since the flexural modulus of the upper and lower clad layers 30, 26 of the film waveguide 51 is smaller than or equal to 1,000 MPa.

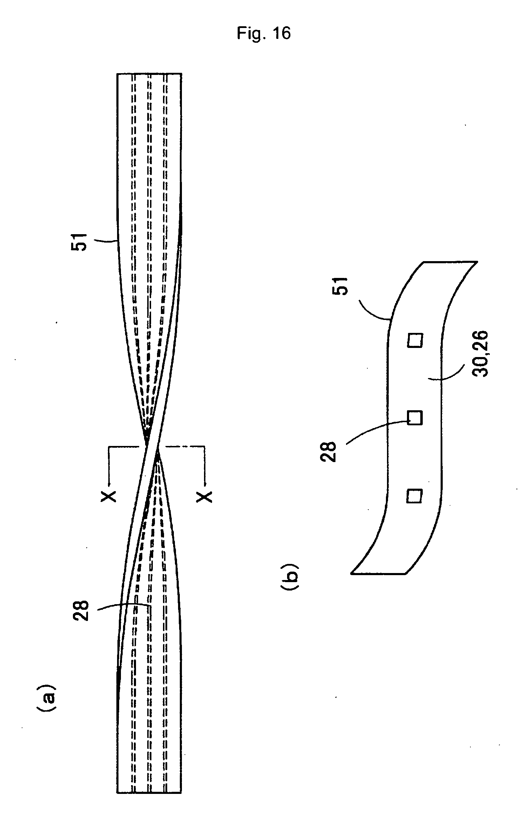

However, the core diameter or the shape of the core are less likely to change even if the film waveguide 51 is stretched or twisted and the transmission property of the film waveguide 51 is less likely to deteriorate since the flexural modulus of the core 28 is greater than the flexural modulus of the upper and lower clad layers 30, 26. That is, when the film waveguide 51 is twisted as in Fig. 16(a), the film waveguide 51 deforms as shown in Fig. 16(b), and the core 28 also deforms, whereby the transmission property of the film waveguide 51 may deteriorate. However, if the flexural modulus of the core 28 is greater than the flexural modulus of the upper and lower clad layers 30, 26, the shape of the core is less likely to change even if the film waveguide 51 is twisted, and thus the transmission property of the film waveguide 51 is less likely to deteriorate (deterioration of transmission property due to deformation etc. of the core shape when the film waveguide 51 is stretched is as described hereinabove).

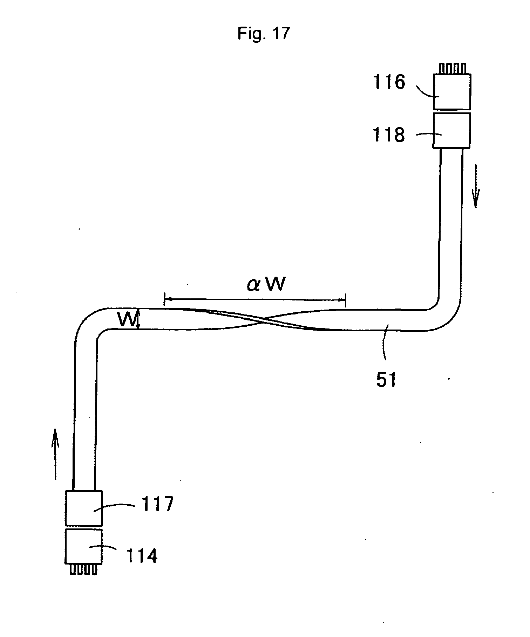

Considering the film waveguide 51 twisted as shown in Fig. 17, where the width of the film waveguide 51 is assumed as W, and the length of the twisted portion out of the entire length of the film waveguide 51 as α × W. The value of α is desirably as small as possible in view of the wiring space in the portable telephone 111. However, if the value of α is smaller than substantially one, the shape of the twisted film waveguide 51 deforms, and the transmission property thereof tends to deteriorate. Therefore, it is desired to reduce the wiring space occupied by the film waveguide 51 so that the value of α approaches one as much as possible.

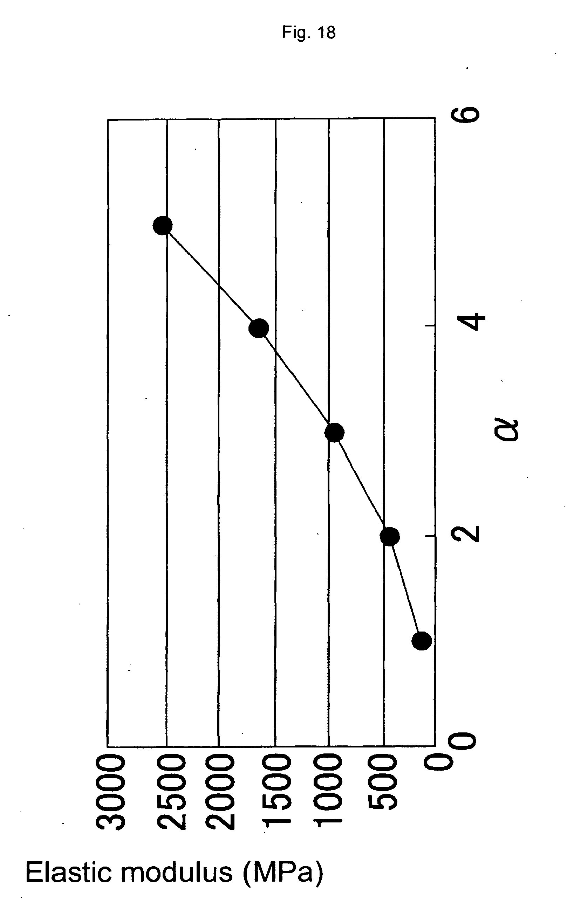

A relationship shown in Fig. 18 is established between the value of α and the limit value of the flexural modulus required for the upper and lower clad layers 30, 26. The flexural modulus of the upper and lower clad layers 30, 26 is made to smaller than or equal to substantially 250 MPa in order to have the value of α close to one.

On the other hand, the repulsive force of the twist increases if the value of α is small, whereby the connectors 117, 118 at both ends may be pulled and detach from the optical connector 114 of the wiring substrate 113 and the optical connector 116 of the wiring substrate 115, respectively. Normally, it is desired that the load of greater than or equal to 0.5 kgf is not applied in the optical connector etc., which is achieved to a satisfactory extent by having the flexural modulus of the film waveguide 51 to be smaller than or equal to 250 MPa. Therefore, the value of α can be brought close to 1 and reduced without causing connection failure of the optical connectors 117, 118 by having the flexural modulus of the upper and lower clad layers 30, 26 of the film waveguide 51 to be smaller than or equal to 250 MPa.

A method of forming an extra length part in the optical cable to reduce the stress by the twist of the optical cable may be used. However, if the extra length part is provided, a space for accommodating the extra length part is required at the hinge part, which enlarges the hinge part and inhibits miniaturization of the portable telephone. The hinge part 112 does not become thick even if the film waveguide 51 is twisted in the hinge part 112 by adopting the configuration of the portable telephone 111 etc.

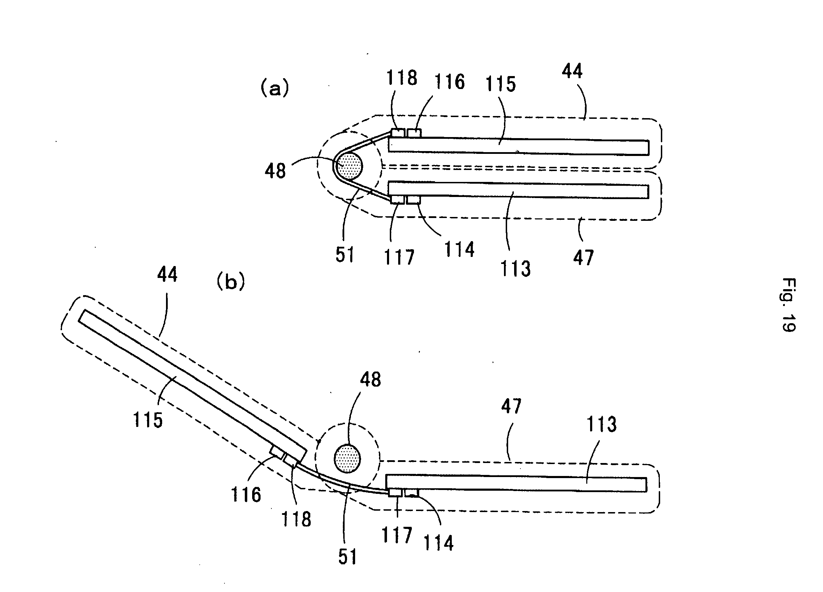

The hinge part 48 can be made smaller as shown in Figs. 19(a), (b) for the portable telephone in which the film waveguide 51 is not winded in a spiral form, and is not a biaxial rotation type. In such portable telephone, the film waveguide 51 is at its natural length without sagging when the display part 44 and the operation part 47 are in the opened state as shown in Fig. 19(b), but the tensile force is applied to the film waveguide 51 as the film waveguide 51 winds to the hinge part 48 when the display part 44 is folded as in Fig. 19(a). In such case as well, the deformation of the core 28 can be reduced, and the deterioration of the transmission property of the film waveguide 51 can be reduced as described in Figs. 10(a), (b) by having the flexural modulus of the core 28 smaller than the flexural modulus of the upper and lower clad layers 30, 26.

### Embodiment 6

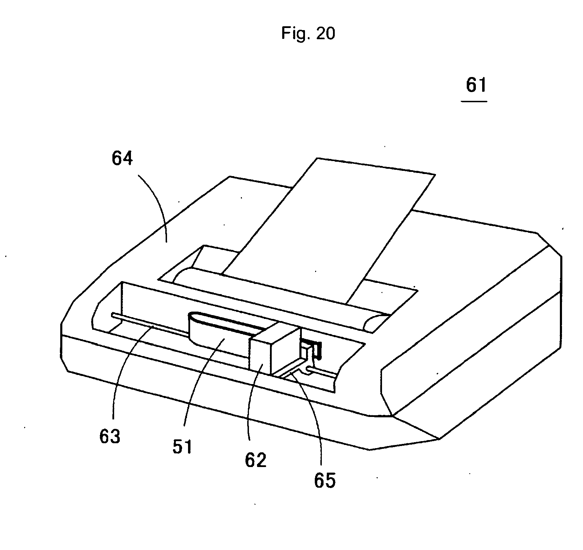

Fig. 20 is a perspective view of a printer 61, which is Embodiment 6 of the present invention. In the ink jet type printer or a dot impact type printer, a printing head 62 is fixed on a supporting part 65, and the supporting part 65 travels to the left and the right along a guide bar 63. The printing information is sent from a printer main body 64 to the printing head 62.

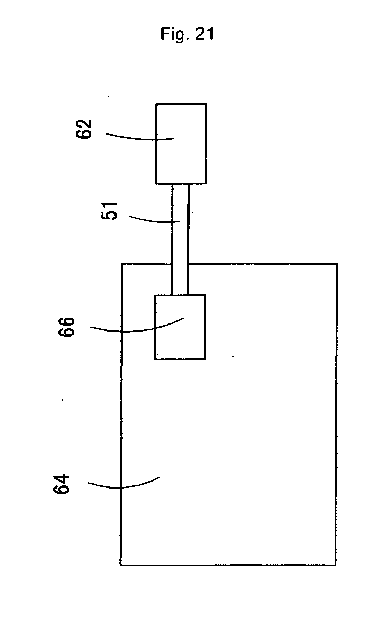

In Embodiment 6, a control section 66 in the printer main body 64 and the printing head 62 are connected by way of the film waveguide 51 according to the present invention, as shown in Fig. 21, to transmit the printing information from the printer main body 64 to the printing head 62. When the printing quality of the printer enhances and the dot density (dpi) increases, and further, the printing speed becomes faster and the amount of signal transmitted from the printer main body 64 to the printing head 62 also rapidly increases, large volume of signal can be transmitted at high speed to the printing head 62 by using the film waveguide 51.

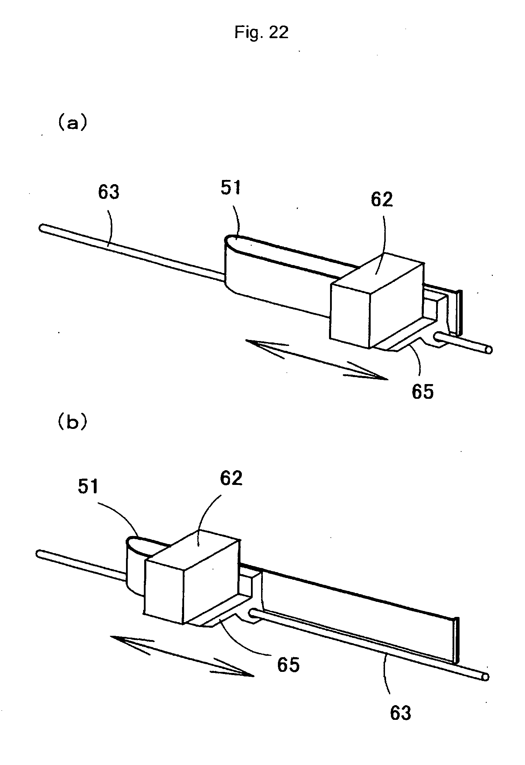

As shown in Figs. 22(a) and 22(b), as the printing head 62 travels to the left and the right at high speed, the folded region of the film waveguide 51 moves therewith, and a large load applies, but the durability of the film waveguide 51 can be enhanced since the flexurale performance is high in the film waveguide 51 of the present invention.

### Embodiment 7

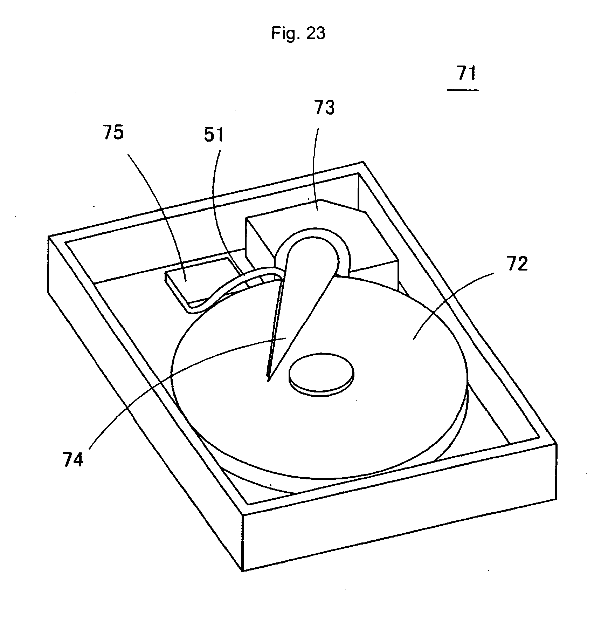

Fig. 23 is a perspective view of a hard disc drive 71, which is Embodiment 7 of the present invention. In the hard disc drive 71, a data reading head driving unit 73 is arranged at the vicinity of the hard disc 72, and the distal end of a reading head 74 extended from the data reading head driving unit 73 faces the surface of the hard disc 72. One end of the film waveguide 51 is connected to the circuit substrate 75 mounted with the control circuit, and the other end of the film waveguide 51 is passed through the basal part of the reading head 74 and connected to the optical element at the distal end of the reading head 74. The film waveguide 51 has a function of transmitting data (optical signal) between the circuit substrate 75 and the reading head 74 when reading the data stored in the hard disc 72 or when writing data thereto.

The volume of the data to be stored in the hard disc drive 71 is becoming larger. However, there are limits with respect to the density of transmission with the flexible print substrate conventionally used as the data transmission path, and either the number of flexible print substrate is increased or the flexible print substrate is enlarged in order to be used for the data transmission path of the hard disc drive becoming of larger volume, which arises problems in flexural performance and size. However, the transmission path having bending property, and further, being compact and allowing large volume data transmission is realized using the film waveguide 51.

## Claims

1. A film waveguide (35, 36, 37) formed with a core between a pair of clad layers (26, 30),
wherein the clad layers (26, 30) are formed by a polymer, and joined by way of resin the film being **characterized in that** the resin has a flexural modulus of smaller than or equal to 1,000 MPa and contains a hydrogen bonding group in a functional group of a precursor,
wherein the clad layers are hydrogen bonded through the hydrogen bonding group.

2. A method of manufacturing a film waveguide (35, 36, 37) comprising the steps of:
molding a first clad layer (26) formed with a concave groove (25) for core filling;
molding a second clad layer (30); and
supplying resin having a flexural modulus of smaller than or equal to 1,000 MPa and containing hydrogen bonding group in a functional group of a precursor, so as to laminate the surface formed with the concave groove (25) of the first clad layer(26) and the second clad layer (30),
wherein the first and second clad layers (26, 30) are formed by a polymer and wherein the clad layers are hydrogen bonded through the hydrogen bonding group.

3. The method of manufacturing a film waveguide (35) according to claim 2,
further comprising the step of:
forming a core (28) in the concave groove (25) by the resin, the resin further having a refraction index higher than the first and second clad layers (26, 30).

4. The method of manufacturing a film waveguide (36) according to claim 2,
further comprising the step of:
forming a core (28) having a flexural modulus of smaller than or equal to 1,000 MPa in the concave groove (25) of the first clad layer (26);
the resin further having a refraction index lower than the core (28).

5. The method of manufacturing a film waveguide (37) according to claim 2,
further comprising the steps of:
forming a core (28) in the concave groove (25) of the first clad layer (26);
wherein supplying the resin is performed on the first clad layer (26) and the core (28), the resin further having a refraction index lower than the core (28),
the method further comprising the steps of:
pressing the resin with a die surface having satisfactory separation property, and spreading the resin between the first clad layer (26) and the core (28) and the die surface; and
curing the resin, forming a second clad layer (27, 30) with the resin, and separating the die surface from the second surface.

6. A film waveguide module (91), wherein the film waveguide (35, 36, 37) according to claim 1 and a light projecting element (93) or a light receiving element (95) are arranged and integrated to be optically coupled.

7. A foldable electronic device (111) having one member (44) and another member (47) coupled in a freely rotating manner by a rotating portion (112), wherein the film waveguide (51) according to claim 1 is passed through the rotating portion (112) and wired between one member (44) and the other member (47).

8. An electronic device (71) including a moving part (74) in a device main body; wherein the moving part (74) and the device main body are optically coupled by way of the film waveguide (51) according to claim 1.

## Patentansprüche

1. Filmwellenleiter (35, 36, 37), der mit einem Kern zwischen einem Paar Verkleidungsschichten (26, 30) ausgebildet ist,
wobei die Verkleidungsschichten (26, 30) durch ein Polymer gebildet und mittels Harz verbunden werden,
wobei der Film **dadurch gekennzeichnet ist, dass** das Harz einen Biegemodul von maximal 1.000 MPa besitzt und eine Wasserstoffbrückenbindungsgruppe in einer funktionalen Gruppe eines Vorläufers enthält,
wobei die Verkleidungsschichten dank Wasserstoffbrückenbindungen durch die Wasserstoffbrückenbindungsgruppe gebunden sind.

2. Verfahren zur Herstellung eines Filmwellenleiters (35, 36, 37), das folgende Schritte umfasst:
- Formen einer ersten Verkleidungsschicht (26), die mit einer konkaven Nut (25) zur Kernfüllung ausgebildet ist;
- Formen einer zweiten Verkleidungsschicht(30); und
- Zuführen von Harz, das einen Biegemodul von maximal 1.000 MPa besitzt und eine Wasserstoffbrückenbindungsgruppe in einer funktionalen Gruppe eines Vorläufers enthält, so dass die Fläche laminiert wird, die mit der konkaven Nut (25) der ersten Verkleidungsschicht (26) und der zweiten Verkleidungsschicht (30) gebildet wird,
wobei die erste und die zweite Verkleidungsschicht (26, 30) durch ein Polymer gebildet werden,
und wobei die Verkleidungsschichten dank Wasserstoffbrückenbindungen durch die Wasserstoffbrückenbindungsgruppe gebunden sind.

3. Verfahren zur Herstellung eines Filmwellenleiters (35) nach Anspruch 2, das des Weiteren folgenden Schritt umfasst:
- Ausbilden eines Kerns (28) in der konkaven Nut (25) durch das Harz, wobei das Harz des Weiteren einen Brechungsindex aufweist, der höher als der der ersten und der zweiten Verkleidungsschicht (26, 30) ist.

4. Verfahren zur Herstellung eines Filmwellenleiters (36) nach Anspruch 2, das des Weiteren folgenden Schritt umfasst:
- Ausbilden eines Kerns (28) mit einem Biegemodul von maximal 1.000 MPa in der konkaven Nut (25) der ersten Verkleidungsschicht (26);
wobei das Harz des Weiteren einen Brechungsindex aufweist, der kleiner als der des Kerns (28) ist.

5. Verfahren zur Herstellung eines Filmwellenleiters (37) nach Anspruch 2, das des Weiteren folgende Schritte umfasst:
- Ausbilden eines Kerns (28) in der konkaven Nut (25) der ersten Verkleidungsschicht(26);
wobei das Zuführen des Harzes auf der ersten Verkleidungsschicht (26) und dem Kern (28) ausgeführt wird, wobei das Harz des Weiteren einen Brechungsindex aufweist, der kleiner als der des Kerns (28) ist,
wobei das Verfahren des Weiteren folgende Schritte umfasst:
- Pressen des Harzes mit einer Fläche eines Ausformwerkzeugs mit einer zufriedenstellenden Trennfähigkeit, und Ausbreiten des Harzes zwischen der ersten Verkleidungsschicht (26) und dem Kern (28) und der Fläche des Ausformwerkzeugs, und
- Härten des Harzes, Ausbilden einer zweiten Verkleidungsschicht (27, 30) mit dem Harz, und Trennen der Fläche des Ausformwerkzeugs von der zweiten Fläche.

6. Filmwellenleitermodul (91), wobei der Filmwellenleiter (35, 36, 37) nach Anspruch
1 und ein Lichtprojektionselement (93) oder ein Lichtempfangselement (95) so angeordnet und integriert sind, dass sie optisch gekoppelt sind.

7. Zusammenklappbares elektronisches Gerät (111) mit einem Element (44) und einem weiteren Element (47), die in einer frei rotierenden Weise durch einen rotierenden Abschnitt (112) gekoppelt sind,
wobei der Filmwellenleiter (51) nach Anspruch 1 durch den rotierenden Abschnitt (112) hindurchgeführt wird und zwischen einem Element (44) und dem weiteren Element (47) verdrahtet ist.

8. Elektronisches Gerät (71), das einen beweglichen Teil (74) in einem Gerätehauptkorpus umfasst; wobei der bewegliche Teil (74) und der Gerätehauptkorpus optisch mittels des Filmwellenleiters (51) nach Anspruch 1 gekoppelt sind.

## Revendications

1. Film guide d'onde (35, 36, 37) formé d'un coeur entre une paire de couches de revêtement (26, 30),
dans lequel les couches de revêtement (26, 30) sont formées d'un polymère et sont jointes au moyen de résine, le film étant **caractérisé en ce que** la résine a un module de flexion inférieur ou égal à 1000 MPa et contient un groupe à liaison hydrogène dans un groupe fonctionnel d'un précurseur,
dans lequel les couches de revêtement forment des liaisons hydrogène par l'intermédiaire du groupe à liaison hydrogène.

2. Méthode de fabrication d'un film guide d'onde (35, 36, 37) comprenant les étapes de :
mouler une première couche de revêtement (26) formée d'une rainure concave (25) pour un remplissage de coeur ;
mouler une deuxième couche de revêtement (30) ; et
fournir de la résine ayant un module de flexion inférieur ou égal à 1000 MPa et contenant un groupe à liaison hydrogène dans un groupe fonctionnel d'un précurseur, de manière à stratifier la surface formée de la rainure concave (25) de la première couche de revêtement (26) et la deuxième couche de revêtement (30),
dans lequel les première et deuxième couches de revêtement (26, 30) sont formées d'un polymère, et dans lequel les couches de revêtement forment des liaisons hydrogène par l'intermédiaire du groupe à liaison hydrogène.

3. Méthode de fabrication d'un film guide d'onde (35) selon la revendication 2, comprenant en outre l'étape de :
former un coeur (28) dans la rainure concave (25) par la résine, la résine ayant en outre un indice de réfraction supérieur à celui des première et deuxième couches de revêtement (26, 30).

4. Méthode de fabrication d'un film guide d'onde (36) selon la revendication 2, comprenant en outre l'étape de :
former un coeur (28) ayant un module de flexion inférieur ou égal à 1000 MPa dans la rainure concave (25) de la première couche de revêtement (26) ;
la résine ayant en outre un indice de réfraction inférieur à celui du coeur (28).

5. Méthode de fabrication d'un film guide d'onde (37) selon la revendication 2, comprenant en outre les étapes de :
former un coeur (28) dans la rainure concave (25) de la première couche de revêtement (26) ;
dans lequel la fourniture de la résine est effectuée sur la première couche de revêtement (26) et le coeur (28), la résine ayant en outre un indice de réfraction inférieur à celui du coeur (28),
la méthode comprenant en outre les étapes de :
presser la résine avec une surface de matrice ayant une propriété de séparation satisfaisante, et étaler la résine entre la première couche de revêtement (26) et le coeur (28) et la surface de matrice ; et
durcir la résine, former une deuxième couche de revêtement (27, 30) avec la résine et séparer la surface de matrice de la deuxième surface.

6. Module de film guide d'onde (91), dans lequel le film guide d'onde (35, 36, 37) selon la revendication 1 et un élément de projection de lumière (93) ou un élément de réception de lumière (95) sont agencés et intégrés pour être couplés optiquement.

7. Dispositif électronique pliable (111) ayant un membre (44) et un autre membre (47) couplés, de manière à pouvoir tourner librement, par une portion de rotation (112), dans lequel
le film guide d'onde (51) selon la revendication 1 est passé à travers la portion de rotation (112) et est câblé entre un membre (44) et l'autre membre (47).

8. Dispositif électronique (71) incluant une partie mobile (74) dans un corps principal de dispositif ; dans lequel la partie mobile (74) et le corps principal de dispositif sont couplés optiquement par l'intermédiaire du film guide d'onde (51) selon la revendication 1.
